# EUROPÄISCHE PATENTANMELDUNG

(11) **EP 3 889 212 A1**
(43) Veröffentlichungstag der Anmeldung: **06.10.2021**
(21) Anmeldenummer: 20167916.4
(22) Anmeldetag: 03.04.2020
(51) Int. Cl.: C08J 9/06, C08J 9/12, C08J 9/232

(54) **POLYETHERIMID-POLYETHERETHERKETON-PARTIKELSCHÄUME FÜR ANWENDUNGEN IM LEICHTBAU**

(71) Anmelder: Evonik Operations GmbH, 45128 Essen (DE)
(72) Erfinder: TRASSL, Christian, 95485 Warmensteinach (DE); HOLLEYN, Denis, 65719 Hofheim am Taunus (DE); BERNHARD, Kay, 06410 Cheshire, CT (US); WURSCHE, Roland, 48249 Dülmen (DE); GEERKENS, Christian, 95485 Warmensteinach (DE); BLASCHKE, Jörg, 42857 Remscheid (DE)
(74) Vertreter: Evonik Patent Association

(57) **Zusammenfassung**

Polymerschäume auf Basis von Polyetherimiden (PEI) oder Blends aus Polyetherimiden und Polyetheretherketon (PEEK) erfüllen die von der Luftfahrtindustrie geforderten gesetzlichen Vorgaben für das Luftfahrt-Interieur wie auch Luftfahrt-Exterieur.

## Beschreibung

### Gebiet der Erfindung

Polymermischung enthaltend Polyetherimid und Polyetheretherketon sowie mindestens ein Nukleierungsmittel zur Herstellung von Schäumen

Polymerschäume auf Basis von Blends aus Polyetherimiden (PEI) und Polyetheretherketon (PEEK) erfüllen die von der Luftfahrtindustrie geforderten gesetzlichen Vorgaben für das Luftfahrt-Interieur wie auch Luftfahrt-Exterieur. Speziell die Anforderungen an das Brandverhalten, die Medienbeständigkeit und die Mechanik stellen hier eine große Herausforderung dar. Nach dem Stand der Technik werden geeignete Polymerschäume als Halbzeuge hergestellt. Die Nachbearbeitung zu Formteilen ist unwirtschaftlich hinsichtlich Zeit und Materialausnutzung, wie z.B. durch große Mengen Schnittabfall. Die Erfindung löst dieses Problem dadurch, dass das prinzipiell geeignete Material zu Partikelschaum-Formteilen verarbeitet werden kann. Diese Formteile können ohne Nachbearbeitung in kurzen Zykluszeiten und damit wirtschaftlich hergestellt werden. Des Weiteren ergeben sich dadurch neue Möglichkeiten der Funktionsintegration, wie z.B. durch direktes Einschäumen von Inserts usw., und hinsichtlich der gestalterischen Freiheit.

### Stand der Technik

Zum Verbau in der Luftfahrtindustrie geeignete Schaumwerkstoffe sind allgemein bekannt. Jedoch sind dazu zu einem überwiegenden Teil nur Schaumstoffe aus reinem PMI (Polymethacrylimid), PPSU (Polyphenylensulfone) oder PES (Polyethsulfonen) beschrieben. In der Literatur auch zu finden, jedoch aus toxikologischer Sicht ungeeignet, ist auch PI (Polyarylimid). Alle diese Materialien werden bislang ausschließlich als Block- bzw. Plattenmaterialien eingesetzt.

Auch andere Materialien sind weniger ausführlich als Plattenmaterial zum Verbau in der Luftfahrtindustrie beschrieben. So stellt z.B. Poly(oxy-1,4-phenylsulfonyl-1,4-phenyl) (PESU) ein solches Material dar. Dieses wird beispielsweise unter dem Produktnamen Divinycell F von der Firma DIAB vertrieben. Bei der weiteren Verarbeitung dieser Extrusionsschaumplatten fallen jedoch unwirtschaftlich große Mengen Verschnittmaterial an.

Eine wirtschaftliche Methode zur Vermeidung von Schnittabfall bei der Herstellung von dreidimensionalen Schaumstoff-Formteilen ist die Verwendung von Schaumpartikeln (bead foams) anstatt von Blockschäumen. Alle nach dem Stand der Technik verfügbaren Partikelschäume haben entweder Nachteile bei der Verwendung bei hohen Temperauren oder aber insgesamt, und insbesondere bei diesen hohen Temperaturen, nicht optimale mechanische Eigenschaften. Hinzu kommt, dass nur sehr wenige Schaumstoffe bekannt sind, die nicht leicht zu entflammen sind und daher z.B. in Innenräumen von Straßen-, Schienen- oder Luftfahrzeugen verbaut werden können. So haben beispielsweise Partikelschäume auf Basis von Polypropylen (EPP), Polystyrol (EPS), thermoplastischem Polyurethan-Elastomer (E-TPU) oder PMI (ROHACELL Triple F) eine unzureichende Flammschutzwirkung, während sämtliche prinzipiell geeignete inhärent flammgeschützte Polymere, wie z.B. PES, PEI, PEEK oder PPSU nach aktuellem Stand der Technik nur zu Blockschäumen verarbeitet werden.

### Aufgabe

Aufgabe der vorliegenden Erfindung war es in Hinblick auf den Stand der Technik eine Zusammensetzung zur Herstellung neuartiger Schaumstoffe, für die Verwendung im Flugzeugbau zur Verfügung zu stellen. Dabei sollen die resultierenden Schaumstoffe eine gute Kombination aus Anwendbarkeit bei hohen Temperaturen, guten mechanischen Eigenschaften, insbesondere bezüglich der Reißdehnung und eine für viele Anwendungen im Bereich des Fahrzeug- und Flugzeugbaus zumindest ausreichende Flammschutzwirkung haben. Weiterhin soll aus der zu entwickelnden Zusammensetzung über verschiedenste Methoden und mit eine großen Brandbreite von dreidimensionalen Formen der Schaumstoff realisierbar sein und bei der Herstellung des finalen Bauteils möglichst kein oder nur sehr wenig Verschnitt anfallen.

Weitere nicht explizite Aufgaben können sich aus der Beschreibung, den Ansprüchen oder den Beispielen des vorliegenden Textes ergeben, ohne dazu an dieser Stelle explizit aufgeführt worden zu sein.

### Lösung

Gelöst werden die Aufgaben durch die Zurverfügungstellung einer neuartigen Zusammensetzung zur Herstellung von temperaturbeständigen, schwer entflammbaren Schaumwerkstoffen zur Anwendung in der Luftfahrtindustrie.
Insbesondere werden diese Aufgaben gelöst durch die Zurverfügungstellung von Polymermischungen, enthaltend Polyetherimid (PEI) und Polyetheretherketon (PEEK) sowie mindestens ein Nukleierungsmittel zur Herstellung von Schäumen mit einer Dichte von 40 bis ≤ 200 kg/m³ bestimmt nach DIN EN ISO 1183 und einer Glasübergangstemperatur, gemessen nach DIN EN ISO 6721-1, zwischen 140 und 230 °C.
Geeignet sind Polymermischungen, die dadurch gekennzeichnet sind, dass 50 bis 99,999 Gew% PEI und 0 bis 49,999 Gew% PEEK, 0,001 bis 2 Gew% Nukleierungsmittel, 0 bis 25 Gew% eines Treibmittels und dass 0 bis 20 Gew% eines Additives erhalten sind.
Insbesondere eignen sich Polymermischung bestehend aus 60 bis 79,999 Gew% PEI und 20 bis 39,999 Gew% PEEK und 0,001 bis 20 Gew% eines Treibmittels.
Bevorzugt sind Polymermischungen, die 0,1 bis 17 Gew% eines Treibmittels enthalten.
Die Wahl der Treibmittel ist relativ frei und bestimmt sich für den Fachmann insbesondere durch die gewählte Schäumungsmethode, die Löslichkeit im Polymer und die Schäumtemperatur. Geeignet sind zum Beispiel Alkohol, wie z.B. Isopranol oder Butanol, Ketone, wie Aceton oder Methylethylketon, Alkane, wie iso- oder n-Butan, bzw. -Pentan, Hexan, Heptan oder Octan, Alkene, wie zum Beispiel Penten, Hexen, Hepten oder Octen, CO₂, N₂, Wasser, Ether, wie zum Beispiel Diethylether, Aldehyde, wie z.B. Formaldehyd oder Propanal, Fluor(chlor)kohlenwasserstoffe, chemische Treibmittel oder um Mischungen aus mehreren dieser Substanzen.

Bei den chemischen Treibmitteln handelt es sich um weniger oder nicht flüchtige Substanzen, die unter den Schäumungsbedingungen chemisch zersetzt werden und dabei das eigentliche Treibmittel bilden. Ein sehr einfaches Beispiel dafür stellt tert-Butanol dar, welches unter Schäumungsbedingen Isobuten und Wasser bildet. Weitere Beispiele sind NaHCO₃, Zitronensäure bzw. deren Derivate, Azodicarbonamid (ADC), bzw. Verbindungen davon ausgehend, Toluolsulfonylhydrazin (TSH), Oxybis(benzosulfohydroazid) (OBSH) oder 5-Phenyl-tetrazol (5-PT).

Zusätzlich enthalten Schäume üblicherweise verschiedene Additive. In Abhängigkeit von der Art des Additives werden den Polymermischungen 0 bis 20 Gew% eines Additives zugegeben. Bei den Additiven handelt es sich um Flammschutzadditive, Weichmacher, Pigmente, UV-Stabilisatoren, Nukleierungsmittel, Schlagzähmodifier, Haftvermittler, Rheologiemodifier, Kettenverlängerer, Fasern, Plättchen und/oder um Nanopartikel.
Als Flammschutzadditive kommen in der Regel Phosphor-Verbindungen, insbesondere Phosphate, Phosphine oder Phosphite zum Einsatz. Geeignete UV-Stabilisatoren bzw. UV-Absorber sind dem Fachmann im Allgemeinen bekannt. In der Regel verwendet man dazu HALS-Verbindungen, Tiuvine oder Triazole. Als Schlagzähmodifier werden in der Regel Polymerpartikel, aufweisend eine Elastomer- bzw. Weichphase verwendet. Dabei handelt es sich häufig um Kern-(Schale-) Schale-Partikel, mit einer Außenschale, die als solche maximal schwach vernetzt ist und als reines Polymer eine zumindest minimale Mischbarkeit mit dem PEI bzw. den Blends aus PEI und PEEK aufweisen würde. Als Pigmente können grundsätzlich alle bekannten Pigmente eingesetzt werden. Insbesondere bei größeren Mengen sollte natürlich der Einfluss auf den Schäumungsvorgang - wie bei allen anderen in größeren Mengen von mehr als 0,1 Gew% eingesetzten Additiven - untersucht werden. Dies ist für den Fachmann mit relativ wenig Aufwand durchführbar.

Geeignete Weichmacher, Rheologiemodifier und Kettenverlängerer sind dem Fachmann im Allgemeinen aus der Herstellung von Folien, Membranen oder Formteilen aus PEI, PEEK oder Blends aus diesen beiden bekannt und können entsprechend mit wenig Aufwand auf die Herstellung eines Schaums aus der erfindungsgemäßen Zusammensetzung übertragen werden. Bei den optional zugegebenen Fasern handelt es sich in der Regel um bekannte Fasermaterialien, die einer Polymerzusammensetzung zugegeben werden können. In einer besonders geeigneten Ausführung der vorliegenden Erfindung handelt es sich bei den Fasern um PEI-, PEEK-, PES-, PPSU- oder um Blend-Fasern, letztere aus einer Auswahl der genannten Polymere.

Die Nanopartikel, die beispielsweise als Röhrchen, Plättchen, Stab, Kugel oder in anderen bekannten Formen vorliegen können, handelt es sich in der Regel um anorganische Materialien. Diese können gleich verschiedene Funktionen in dem fertigen Schaum übernehmen. So wirken diese Partikel teilweise als Nukleierungsmittel beim Schäumen. Weiterhin können die Partikel die mechanischen Eigenschaften, wie auch die (Gas-)Diffusionseigenschaften des Schaums beeinflussen. Weiterhin tragen die Partikel zusätzlich zur Schwerentflammbarkeit bei.

Neben den aufgeführten Nanopartikel können auch Mikropartikel oder wenig mischbare, phasenseparierende Polymere als Nukleierungsmittel zugefügt sein. Dabei sind die beschriebenen Polymere in der Betrachtung der Zusammensetzung getrennt von den anderen Nukleierungsmitteln zu sehen, da diese primär einen Einfluss auf die mechanischen Eigenschaften des Schaums, die Schmelzviskosität der Zusammensetzung und damit die Schäumungsbedingungen nehmen. Die zusätzliche Wirkung eines phasenseparierenden Polymers als Nukleierungsmittel ist ein zusätzlicher gewünschter, in diesem Fall jedoch nicht primärer Effekt dieser Komponente. Aus diesem Grund werden diese zusätzlichen Polymere in der Gesamtbilanz weiter oben getrennt von den übrigen Additiven aufgeführt.

Diese Polymermischungen werden über bekannte Verfahren zu Schäumen verarbeitet. Ein übliches Verfahren ist die Extrusion. Erfindungsgemäß wird mittels Extrusion ein Schaum mit einer Dichte von 40 bis ≤ 200 kg/m³ hergestellt, bestimmt nach DIN EN ISO 1183. Bevorzugt werden mittels Unterwassergranulierung treibmittelbeladene Partikel hergestellt.
Die treibmittelbeladenen Partikel können in verschiedenen Formen zur Verfügung gestellt werden. Vorteilhafterweise werden Ellipsoid-Partikel mit einer Masse von 0,5-15 mg, bevorzugt zwischen 1-12 mg, besonders bevorzugt zwischen 3 und 9 mg, hergestellt.
Als Ellipsoide bezeichnet man 3-dimensionale Formen, auf Basis einer Ellipse (2-dimensional). Sind die Halbachsen gleich, ist das Ellipsoid eine Kugel, Stimmen 2 Halbachsen überein, ist das Ellipsoid ein Rotationsellipsoid (Rugbyball), sind alle 3 Halbachsen verschieden, heißt das Ellipsoid triaxial oder dreiachsig.
In einer besonders bevorzugten Variante wird ein Verfahren zur Herstellung eines Partikelschaums zur Verfügung gestellt, bei der eine Zusammensetzung, bestehend aus 50 bis 99,999 Gew% PEI, 0 bis 49,999 Gew% PEEK und 0,001 bis 2 Gew% Nukleierungsmittel in einem Extruder mittels Unterwasser- oder Stranggranulierung compoundiert und zu Granulat verarbeitet werden. Anschließend wird das erhaltene Granulat in einem geeigneten Behältnis, beispielsweise Trommel, Kessel, Reaktor, mit 0,001 bis 20 Gew% Treibmittel, bevorzugt 0,1 -17 Gew%, gequollen, und über ein Sieb die gequollenen Partikel abgetrennt und getrocknet.
Die erhaltenen treibmittelbeladene Partikel werden durch Erhitzen vorgeschäumt. Das Erhitzen erfolgt mittels IR-Strahlung, Fluid (beispielsweise Wasserdampf), elektromagnetische Wellen, Wärmeleitung, Konvektion oder eine Kombination dieser Verfahren.
Durch das Erhitzen der treibmittelbeladenen Partikel werden Schaumpartikel erhalten. Diese Schaumpartikel weisen eine Schüttdichte zwischen 40 bis ≤ 200 kg/m³ auf, bevorzugt zwischen 30 und 90 kg/m³, bestimmt nach DIN EN ISO 1183.

Vorzugsweise beträgt der mittlere Zelldurchmesser des Partikelschaums ≤ 500 µm, besonders bevorzugt kleiner 250 µm.
Die Größe einer Zelle lässt sich in vielen Fällen einfach, zum Beispiel unter Zuhilfenahme eines Mikroskops, ausmessen. Dies ist insbesondere anwendbar, wenn die Zellwand zwischen zwei Zellen gut erkennbar ist.

Der erfindungsgemäße Partikelschaum weist dabei als geschäumtes Material eine Glasübergangstemperatur zwischen140°C und 230°C, bevorzugt zwischen 180 und 225 °C auf. Angegebene Glasübergangstemperaturen werden erfindungsgemäß - wenn nicht anders ausgeführt - mittels DSC (Differential Scanning Calometry) gemessen. Der Fachmann weiß dazu, dass die DSC nur ausreichend aussagekräftig ist, wenn nach einem ersten Aufheizzyklus bis zu einer Temperatur, die minimal 25 °C oberhalb der höchsten Glasübergangs- bzw. Schmelztemperatur, dabei jedoch mindestens 20 °C unterhalb der tiefsten Zersetzungstemperatur eines Materials liegt, die Materialprobe für mindestens 2 min bei dieser Temperatur gehalten wird. Danach wird wieder auf eine Temperatur, die mindestens 20 °C unterhalb der tiefsten zu bestimmenden Glasübergangs- oder Schmelztemperatur liegt, abgekühlt, wobei die Abkühlrate maximal 20 °C / min, bevorzugt maximal 10 °C / min betragen sollte. Nach einer weiteren Wartezeit von wenigen Minuten erfolgt dann die eigentliche Messung, bei der mit einer Aufheizrate von in der Regel 10 °C / min oder weniger die Probe bis mindestens 20 °C über die höchste Schmelz- oder Glasübergangstemperatur erhitzt wird. Die erhaltenen Schaumpartikel werden zu Formteilen verarbeitet, indem die vorgeschäumten Partikel mit Hilfe eines formgebenden Werkzeugs und Energiezufuhr zu Formteilen mit einer Dichte von 40 bis ≤ 200 kg/m³ versintert werden.
Die Energiezufuhr erfolgt durch IR-Strahlung, Verwendung eines geeigneten Fluids (beispielsweise Wasserdampf oder Heißluft), Wärmeleitung oder elektromagnetische Wellen.
Alternativ können die Schaumpartikel mit Hilfe eines formgebenden Werkzeugs und eines Additives verklebt werden.

Besonders bevorzugt wird der hergestellte Partikelschaum - unabhängig vom verwendeten Verfahren - anschließend mit einem Deckmaterialien verklebt, vernäht oder verschweißt. Verschweißt meint dabei, dass durch Erhitzen der Komponenten eine stoffschlüssige Verbindung (Adhäsion) zwischen dem Schaumkern und den Deckmaterialien entsteht.

Bei dem Deckmaterial kann es sich um Holz, Metalle, Dekorfolien, Compositematerialien, Prepregs oder andere bekannte Materialien handeln.
Beispielsweise kann es sich um einen Schaumkern mit thermoplastischen bzw. vernetzten Deckschichten handeln. Im Stand der Technik werden verschiedene Verfahren zur Herstellung von Verbundteilen beschrieben.

Ein bevorzugtes Verfahren zur Herstellung eines Verbundteils ist dadurch gekennzeichnet, dass der erfindungsgemäß hergestellte Partikelschaum in Gegenwart eines Deckmaterials derart geschäumt wird, dass es mit diesem, mittels Verkleben oder Verschweißen, verbunden wird.

Bei der Verfahrensvariante, bei der die Beladung mit Treibmittel im Extruder erfolgt kann der Blend aus PEI und PEEK alternativ auch bei Austritt aus dem Extruder mit Hilfe einer geeigneten Düse, optional in Kombination mit Deckmaterialien, zu Halbzeugen verarbeitet werden.
Alternativ kann die Zusammensetzung mit Hilfe einer Schaumspritzvorrichtung direkt unter Formgebung aufgeschäumt werden (Schaumspritzgießen).

Unabhängig von den eingesetzten Varianten können die Partikelschäume oder Verbundmaterialien während des Schäumens mit Inserts versehen werden und/oder Kanäle in den Partikelschaum eingebaut werden.
Weiterhin sehr überraschend ist, dass alle benötigten Materialeigenschaften, die für die Verwendung in einem Flugzeuginnenraum vorausgesetzt werden, durch einen erfindungsgemäßen Partikelschaum genauso erfüllt werden, wie durch einen entsprechenden Schaum in Plattenform. Für PMI z.B. ist dieser Zusammenhang nicht gegeben, da für dieses Polymethacrylimid Plattenware aus einem Blockschaum die Bedingungen erfüllt, während ein Partikelschaum keine Zulassung erhalten würde.

Bevorzugt weisen die erfindungsgemäßen Schaumstoffe einen Schäumungsgrad auf, der eine Reduktion der Dichte gegenüber dem ungeschäumten Material zwischen 1 und 98 %, bevorzugt zwischen 50 und 97 %, besonders bevorzugt zwischen 70 und 95 % ausmacht. Bevorzugt hat der Schaum eine Dichte zwischen 20 und 1000 kg/m³, bevorzugt 40 und 200 kg/m³.

Neben dem erfindungsgemäßen Partikelschaum sind auch Verfahren zu dessen Herstellung Bestandteil der vorliegenden Erfindung.

Grundsätzlich gibt es zwei bevorzugte Vorgehen zur Herstellung der erfindungsgemäßen Partikelschäume. In einer ersten Verfahrensvariante wird eine Zusammensetzung aus 50 bis 99,999 Gew% PEI und 0 bis 49,999 Gew% PEEK, 0,001 bis 2 Gew% eines Nukleierungsmittels, 0,001 bis 20 Gew% eines Treibmittels und optional bis 20 Gew% Additiven mittels einem Extruder mit Lochplatte zu einem geschäumten Granulat verarbeitet. Dabei liegen die Temperaturen zwischen Einzugszone und Schneckenspitze bevorzugt in einem Bereich zwischen 320 und 400 °C. Weiterhin liegt zumeist keine einheitliche Temperatur über diese Strecke vor, sondern beispielsweise ein Gradient mit steigender Temperatur in Förderrichtung der Polymerschmelze. Die Temperatur der Lochplatte liegt dabei zwischen 250 und 350 °C und die Massetemperatur beim Austritt durch die Lochplatte zwischen 230 und 360 °C. In dem Extruder erfolgt dabei in der Regel die Beladung mit dem Treibmittel. Das Granulat schäumt dann beim Austritt aus der Lochplatte. Das so geschäumte Granulat wird dann bevorzugt anschließend zu einem Partikelschaum weiter geschäumt.

In einer Variante dieser Ausführungsform kann die Zusammensetzung beim Austritt aus dem Extruder in einen Unterwassergranulator geleitet werden. Dieser ist dabei derart bezüglich einer Kombination aus Temperatur und Druck ausgelegt, dass ein Schäumen verhindert wird. Durch dieses Vorgehen erhält man ein mit Treibmittel beladenes Granulat, welches später durch erneute Energiezufuhr auf die gewünschte Dichte aufgeschäumt und/oder unter optionaler Formgebung zu einem Partikelschaumwerkstück weiterverarbeitet werden kann.

In einer zweiten Verfahrensvariante zur Herstellung eines Partikelschaums wird eine entsprechende Zusammensetzung wie zur ersten Variante beschrieben mittels eines Extruders mit Lochplatte ebenfalls zunächst zu einem Granulat verarbeitet, dabei jedoch nicht mit einem Treibmittel beladen. Auch hier liegen die - wieder nicht zwingend gleichmäßigen - Temperaturen zwischen Einzugszone und Schneckenspitze in einem Bereich zwischen 320 und 400 °C. Gleichfalls beträgt die Temperatur der Lochplatte zwischen 250 und 350 °C und die Massetemperatur beim Austritt durch die Lochplatte zwischen 230 und 360 °C. Hier wird das Granulat anschließend in einem Autoklaven derart mit einem Treibmittel beladen werden, dass diese darauf zwischen 0,001 und 20 Gew%, bevorzugt zwischen 0,1 und 17 Gew% Treibmittel enthält. Das mit Treibmittel beladene Granulat kann anschließend durch Entspannen und/oder durch Erhitzen auf eine Temperatur von über 200 °C zu einem Partikelschaum geschäumt werden.

Bezüglich der Herstellung eines erfindungsgemäß eingesetzten Blends aus PEI und PEEK, bevorzugt 50 bis 99,999 Gew% PEI und 0,001 bis 49,999 Gew% PEEK sind grundsätzlich auch die beiden zuvor für reine Partikelschäume beschriebenen Methoden anwendbar. Aufgrund der Kristallinität und der hohen Schmelztemperatur des PEEK um die 335 °C müssen die oben angegebenen Temperaturen für die einzelnen Prozessschritte vom Fachmann, in Abhängigkeit von der genauen Zusammensetzung des Blends, wenn dieser mehr als 25 Gew% PEEK aufweisen sollte, angepasst werden. Tendenziell ist davon auszugehen, dass diese Temperaturen etwas höher gewählt werden, als für Blends mit weniger als 25 Gew% PEEK.

In Bezug auf das eigentliche Schäumen sind dem Fachmann grundsätzlich diverse Methoden zum Schäumen von Polymerzusammensetzungen bekannt, die insbesondere in Bezug auf Methoden für thermoplastische Schäume auf die vorliegende Zusammensetzung anwendbar sind. Zum Beispiel kann die Zusammensetzung bei einer Temperatur zwischen 150 und 250 °C und einem Druck zwischen 0,1 und 2 bar aufgeschäumt werden. Bevorzugt erfolgt das eigentliche Schäumen, wenn nicht in Anschluss an die Extrusion, bei einer Temperatur zwischen 180 und 230 °C in einer Normaldruckatmosphäre.

In der Variante der späteren Beladung mit einem Treibmittel wird eine Zusammensetzung, noch ohne Triebmittel, in einem Autoklaven bei einer Temperatur z.B. zwischen 20 und 120 °C und einem Druck z.B. zwischen 30 und 100 bar mit dem Treibmittel beaufschlagt und anschließend durch Senken des Drucks und Erhöhen der Temperatur auf die Schäumtemperatur im Autoklaven geschäumt. Alternativ wird die mit dem Treibmittel beaufschlagte Zusammensetzung im Autoklaven abgekühlt und nach dem Abkühlen entnommen. Diese Zusammensetzung kann dann durch Erhitzen auf die Schäumtemperatur später aufgeschäumt werden. Dies kann beispielsweise auch unter weiterer Formgebung oder in Verbindung mit anderen Elementen wie Inserts oder Deckschichten erfolgen.

Die erfindungsgemäßen Schaumstoffe, bzw. die nach dem erfindungsgemäßen Verfahren hergestellten Schaumstoffe finden in der Konstruktion von Raum- oder Luftfahrzeugen, dem Schiffsbau, Schienenfahrzeugbau oder dem Fahrzeugbau, insbesondere in deren Interieur oder Exterieur Verwendung. Das kann dabei die Partikelschäume, hergestellt nach erfindungsgemäßen Verfahren oder auch nicht, genauso wie die daraus realisierten Verbundmaterialien umfassen. Insbesondere aufgrund der schweren Entflammbarkeit können die erfindungsgemäßen Schaumstoffe auch im Innenraum dieser Fahrzeuge verbaut werden. Darüber hinaus ist es gleichfalls erfinderisch, die genannten Materialien im Schiffsbau, Fahrzeugbau oder Schienenfahrzeugbau einzusetzen.

Die Paritkelschäume auf Basis eines Blends aus PEI und PEEK eignen sich insbesondere dazu, im Innenbereich eines Luftfahrtzeugs eingebaut zu werden. Luftfahrzeug umfasst dabei insbesondere neben Jets oder Kleinflugzeugen auch Hubschrauber oder sogar Raumfahrzeuge. Beispiele für den Verbau im Innenraum eines solchen Luftfahrzeugs sind zum Beispiel die herausklappbaren Tabletts auf der Sitzrückseite einer Passagiermaschine, die Füllung eines Sitzes oder einer Zwischenwand, sowie beispielsweise in innenliegenden Türen.

Partikelschäume auf Basis eines Blends aus PEI und PEEK sind darüber hinaus besonders dazu geeignet, auch im Außenbereich eines Luftfahrtzeugs eingebaut zu werden. Außenbereich meint dabei nicht nur als Füllung in der Außenhaut eines Luftfahrzeugs, sondern insbesondere auch in einer Flugzeugnase, im Heckbereich, in den Tragflächen, in den Außentüren, in den Rudern oder in Rotorblättern.

## Patentansprüche

1. Polymermischung enthaltend Polyetherimid und Polyetheretherketon sowie mindestens ein Nukleierungsmittel zur Herstellung von Schäumen mit einer Dichte von 40 bis ≤ 200 kg/m³ bestimmt nach DIN EN ISO 1183 und einer Glasübergangstemperatur, gemessen nach DIN EN ISO 6721-1, zwischen 140 und 230 °C.

2. Polymermischung gemäß Anspruch 1, **dadurch gekennzeichnet, dass** 50 bis 99,999 Gew% PEI und 0 bis 49,999 Gew% PEEK, 0,001 bis 2 Gew% Nukleierungsmittel, 0 bis 25 Gew% eines Treibmittels und dass 0 bis 20 Gew% eines Additives erhalten sind.

3. Polymermischung gemäß Anspruch 1, **dadurch gekennzeichnet, dass** 0,001 bis 20 Gew% eines Treibmittels zugegeben werden.

4. Polymermischung gemäß Anspruch 1, **dadurch gekennzeichnet, dass** 0,1 bis 10 Gew% eines Additives zugegeben werden.

5. Polymermischung gemäß Anspruch 3, **dadurch gekennzeichnet, dass** mittels Extrusion ein Schaum mit einer Dichte von 25 bis ≤ 100 kg/m³ hergestellt wird.

6. Polymermischung gemäß Anspruch 3, **dadurch gekennzeichnet, dass** mittels Unterwassergranulierung treibmittelbeladene Partikel hergestellt werden.

7. Treibmittelbeladene Partikel gemäß Anspruch 6, **dadurch gekennzeichnet, dass** Ellipsoid-Partikel mit einer Masse von 0,5-15 mg, bevorzugt zwischen 1-12 mg, besonders bevorzugt zwischen 3 und 9 mg, hergestellt werden.

8. Polymermischung gemäß Anspruch 2, **dadurch gekennzeichnet, dass** mittels Unterwasser- oder Stranggranulierung Partikel hergestellt werden, die anschließend in einem geeigneten Behältnis mit Treibmittel beladen werden.

9. Schaumpartikel, **dadurch gekennzeichnet, dass** treibmittelbeladene Partikel gemäß Anspruch 6 bis 8 durch Erhitzen vorgeschäumt wurden.

10. Schaumpartikel gemäß Anspruch 9, **dadurch gekennzeichnet, dass** sie eine Schüttdichte zwischen 25 bis ≤ 100 kg/m³ aufweisen.

11. Formteile, **dadurch gekennzeichnet, dass** Schaumpartikel gemäß Anspruch 10 mit Hilfe eines formgebenden Werkzeugs und Energiezufuhr zu Formschäumen mit einer Dichte von 25 bis ≤ 100 kg/m³ versintert werden.

12. Formteile, **dadurch gekennzeichnet, dass** der Schäumprozess gemäß Anspruch 11 durch IR-Strahlung, Wärmezufuhr mittels eines Fluids, Wärmeleitung oder elektromagnetische Wellen erfolgt.

13. Formteile, **dadurch gekennzeichnet, dass** Schaumpartikel gemäß Anspruch 10 mit Hilfe eines formgebenden Werkzeugs und eines Additives verklebt werden.

14. Verwendung eines PEI/PEEK-Schaums erhältlich nach Anspruch 5 oder eines PEI/PEEK-Partikelschaums nach einem der Ansprüche 11-13 in der Luftfahrtindustrie, dem Schiffsbau, Schienenfahrzeugbau oder dem Fahrzeugbau.
